# FASCICULE DE BREVET EUROPEEN

(11) **EP 0 689 957 B1**
(45) Date de publication et mention de la délivrance du brevet: **11.03.1998**
(21) Numéro de dépôt: 95401345.4
(22) Date de dépôt: 09.06.1995
(51) Int. Cl.: B60N 2/44

(54) **Elément pour armature de dossier de siège notamment de véhicule**
Rahmenelement für Sitzrückenlehne insbesondere Fahrzeugsitzrückenlehne
Element for backrest frame for seats especially vehicle seats

(30) Priorité: 28.06.1994 FR 9407956
(43) Date de publication de la demande: 03.01.1996
(73) Titulaire: CESA COMPAGNIE EUROPEENNE DE SIEGES POUR AUTOMOBILES, 92307 Levallois-Perret Cédex (FR)
(72) Inventeur: Blanke, Philippe, F-45290 Nogent sur Vernisson (FR); Guillemard, Philippe, F-45290 Nogent sur Vernisson (FR)
(74) Mandataire: Polus, Camille

(56) Documents cités:
- EP-A- 0 102 708
- EP-A- 0 435 740
- DE-A- 3 636 912
- DE-A- 4 309 301
- US-A- 5 253 924

## Description

La présente invention concerne les sièges pour véhicules notamment terrestres et a plus particulièrement pour objet un élément pour une armature de dossier de préférence rabattable d'un tel siège.

Les armatures de siège de véhicule automobile terrestre que ce soit celles de l'assise ou du dossier, sont habituellement faites à partir de tubes ou de tôles d'acier emboutis, découpés et mis en forme et, ensuite, réunis et assemblés par soudage ou rivetage notamment.

Une telle technique mécanosoudée met donc en oeuvre de nombreuses pièces distinctes dont la masse est importante et dont le coût de fabrication est relativement élevé.

Une armature de ce type doit satisfaire à des normes draconiennes en matière de sécurité, qui sont édictées par des organismes professionnels et/ou les Pouvoirs Publics.

Il devient particulièrement difficile de faire de telles armatures lorsque le siège qui en est équipé, est pourvu d'une ceinture de sécurité dite "embarquée" c'est-à-dire une ceinture de sécurité dont au moins certains si ce n'est la totalité des points d'ancrage de la sangle sont situés sur le siège et en particulier sur son dossier et non plus situés sur la coque ou structure du véhicule. Lorsque les points d'ancrage sont situés sur le dossier et que celui-ci est de plus rabattable par exemple vers ou contre l'assise pour permettre d'accéder à ce qui se trouve derrière le siège lorsqu'il s'agit d'un dossier de siège avant, ou bien pour gagner en volume de rangement lorsqu'il s'agit d'un dossier de siège arrière, la situation se complique notablement. Cette situation est d'autant plus compliquée s'il s'agit d'un dossier de siège arrière en plusieurs tronçons par exemple du type 1/3, 2/3 c'est-à-dire qu'un tronçon du dossier est prévu pour un occupant et que l'autre tronçon est prévu pour deux occupants et dont l'un au moins de ces tronçons est rabattable. En effet, dans un tel cas, chaque tronçon du dossier n'est en général maintenu en position dressée apte à recevoir un occupant qu'à l'une de ses extrémités, l'extrémité latérale extérieure, sur la coque ou structure et celui qui est prévu pour recevoir deux occupants doit porter de plus au moins un point d'ancrage pour la ceinture de sécurité du passager médian.

On conçoit donc toute la difficulté qu'il y a à fabriquer une armature de dossier le cas échéant rabattable, de siège pour véhicule qui satisfasse à l'ensemble de ces prescriptions et qui soit pourtant pas trop pesant et d'un coût de production acceptable.

Un élément transversal supérieur pour armature de dossier, cet élément étant muni de moyens d'assemblage aux supports correspondants, est connu, notamment de EP-A-0 435 740. EP-A-0 102 708 décrit une armature de dossier munie d'un élément transversal supérieur et d'un point d'ancrage de ceinture de sécurité agencé au-dessus de cet élément.

L'invention a pour but de construire un élément pour armature de dossier notamment rabattable de siège apte à recevoir une ceinture de sécurité embarquée pour véhicule notamment terrestre qui satisfait à ces conditions.

L'invention a pour objet un élément pour armature de dossier de siège pour véhicule notamment terrestre, le dossier étant constitué, entre autres, de deux montants latéraux réunis à une traverse inférieure au voisinage de laquelle est situé le cas échéant un axe de basculement du dossier entre une position dressée et une position rabattue. Cet élément qui est destiné à constituer une traverse supérieure du dossier est remarquable en ce qu'il a une configuration de poutre à section droite évolutive et présente des moyens d'assemblage avec ces montants latéraux, une cavité approximativement médiane apte à recevoir un point d'ancrage d'une ceinture de sécurité ainsi qu'un support terminal apte à recevoir un verrou d'immobilisation pour retenir le dossier dans sa position dressée.

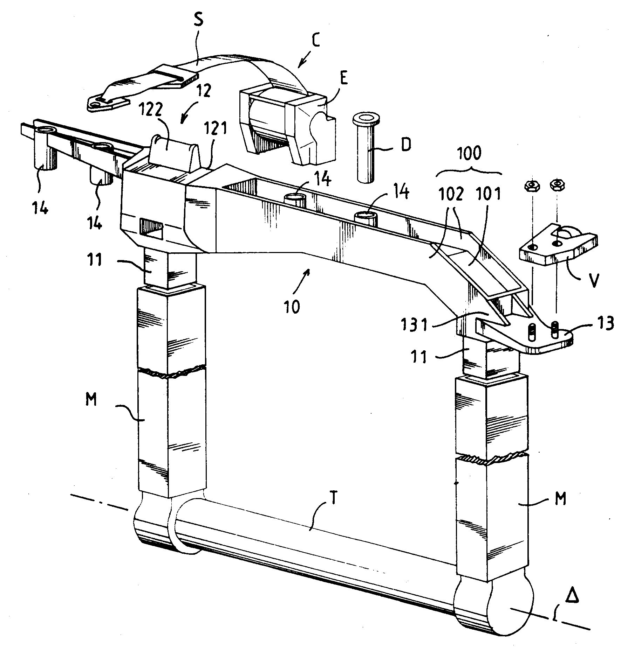

D'autres caractéristiques de l'invention ressortiront de la lecture de la description et des revendications qui suivent ainsi que de l'examen du dessin annexé, donné seulement à titre d'exemple, où la figure unique est une vue perspective schématique d'un mode de réalisation d'un élément selon l'invention, vu de l'avant repéré par rapport à l'axe longitudinal traditionnel d'un véhicule, lorsqu'il occupe sa position dressée où il est apte à recevoir un occupant.

Les armatures pour siège et en particulier pour siège de véhicule notamment terrestre étant bien connues dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit, on utilise toujours un même numéro de référence pour identifier un élément homologue quel que soit le mode de réalisation ou sa variante d'exécution.

Pour la commodité de l'exposé, on décrira successivement chacun des constituants d'un élément transversal supérieur pour armature de dossier de préférence rabattable, de siège pour véhicule notamment terrestre selon l'invention avant d'en exposer au besoin la fabrication, le montage et la mise en oeuvre.

Un élément 10 selon l'invention est destiné à constituer la traverse supérieure de l'armature d'un dossier de siège qui est formé, entre autre, de deux montants M latéraux réunis de toute manière classique convenable à une traverse T inférieure au voisinage de laquelle est situé, le cas échéant, un axe Δ de basculement obtenu à l'aide de pivots ou analogues, entre une position dressée illustrée et une position rabattue par exemple vers ou contre une assise de siège non illustrée. S'il y a lieu, cette armature de dossier est équipée d'un fond par exemple en tôle, dans lequel est pratiquée au besoin une découpe s'il y a lieu servant à placer des objets longilignes encombrants tels des skis. Un tel fond est fixé à l'armature par exemple par collage pour contribuer à sa rigidification, notamment en torsion. Comme on le voit, l'élément 10 est destinée à être réuni aux deux montants latéraux M.

Comme on peut l'observer, cet élément 10 a une configuration de poutre à section 100 droite évolutive, de préférence équimoment, par exemple en H qui présente une âme 101 et deux ailes 102 qui, de préférence, en position dressée du dossier illustré sont respectivement pratiquement horizontale et pratiquement verticales.

La traverse 10 est munie de moyens d'assemblage 11 tels des prolongements distincts, aptes à être assemblés chacun avec un de ces montants latéraux M. Ces prolongements se présentent à la manière de tubes, par exemple à section droite carrée.

La traverse 10 est munie d'une cavité 12 approximativement médiane, apte à recevoir un point d'ancrage E tel que par exemple un enrouleur de sangle S d'une ceinture de sécurité C. Une telle ceinture de sécurité est de tout type connu approprié dans la technique automobile. De préférence, cette cavité 12 est munie d'un rebord 121 qui sert d'appui au point d'ancrage lorsque ce dernier est soumis à un effort dirigé vers l'avant. Un tel point d'ancrage peut donc être maintenu dans la cavité simplement par vissage ou rivetage. De préférence, cette cavité est munie d'un renvoi 122 de la sangle S de la ceinture de sécurité C. Cette ceinture est destinée à l'occupant du milieu d'un siège multiple.

La traverse 10 est munie d'un support 13 relativement plat, de préférence pratiquement parallèle à l'âme 101, tout en étant situé par exemple dans un plan différent de celle-ci par exemple au-dessous comme illustré. Des renforts tels des goussets 131 maintiennent comme illustré le support à l'aide d'une nervure transversale ou similaire. Ce support est destiné à porter une partie d'un verrou de tout type approprié par exemple avec un boîtier relativement plat dans lequel est logé un pêne articulé qui est apte à venir en prise avec une gâche fixée à la structure ou coque, pour immobiliser et retenir le dossier dans sa position dressée. La partie du verrou est montée sur le support à l'aide de moyens de fixation tels des vis, des rivets, des points de soudure ou analogues comme il est bien connu.

La traverse présente au moins une ouverture 14 apte à recevoir un repose-tête classique de tout type approprié connu. Une telle ouverture 14 se présente, de préférence, à la manière d'un fourreau par exemple cylindro-conique orienté pratiquement perpendiculairement à l'âme 101. Cette ouverture reçoit, de préférence, le repose-tête par l'intermédiaire de douilles D par exemple en résine synthétique. Comme on peut l'observer, de préférence, deux ouvertures sont situées entre la cavité 12 et le support 13 et deux autres ouvertures sont situées au-delà de la cavité à l'opposé du support, lorsqu'il s'agit d'un siège pour deux occupants.

Un tel élément est fabriqué s'il y a lieu à partir d'un matériau léger tel un alliage à base d'aluminium, de préférence moulé en coquille ou par injection. Dans un tel cas, le montage de l'élément sur les montants latéraux se fait par emboîtement, par exemple par emmanchement à force complété s'il a lieu d'un sertissage ou d'un collage. Si les montants sont par exemple faits en acier, la traverse peut être surmoulée sur ceux-ci. On peut fabriquer un tel élément à partir d'un matériau synthétique tel une résine appropriée dont les propriétés sont amendées à l'aide de charges et/ou de fibres.

Toutes les particularités de l'invention ressortent clairement de la description et de la figure schématique qui l'illustre. On observera qu'une traverse selon l'invention est venue directement de fonderie ou de moulage et qu'elle permet de réunir toutes les performances précédemment obtenues à l'aide d'une construction traditionnelle mécanosoudée. En outre, cette solution permet d'optimiser la configuration et la consommation de matière tout en permettant un assemblage qui garantit une très bonne résistance.

La traverse selon l'invention convient à tout dossier qu'il soit rabattable ou non, qui n'est fixé à la coque ou structure que d'un seul côté de celle-ci et qui de ce fait est soumis à des efforts, notamment de flexion, importants lorsqu'il subit une force avec une composante située dans un plan parallèle à l'axe longitudinal du véhicule, comme c'est le cas par exemple pour les places arrière d'un véhicule.

Ce qui précède met bien en lumière les particularités distinctives de l'invention, l'intérêt qu'elle offre et les avantages qu'elle procure.

## Revendications

1. Elément transversal supérieur pour armature de dossier de siège pour véhicule notamment terrestre, le dossier étant constitué, entre autre, de deux montants (M) latéraux réunis à une traverse (T) inférieure au voisinage de laquelle est situé le cas échéant un axe (Δ) de basculement du dossier entre une position dressée et une position rabattue, caractérisé en ce que cet élément (10) a une configuration de poutre à section (100) droite évolutive et présente des moyens (11) d'assemblage avec ces montants latéraux (M), une cavité (12) approximativement médiane apte à recevoir un point d'ancrage (E) d'une ceinture de sécurité (C) ainsi qu'un support (13) terminal apte à recevoir un verrou (V) d'immobilisation pour retenir le dossier dans sa position dressée.

2. Elément selon la revendication 1, caractérisé en ce que la section droite évolutive (100) est en H et présente une âme (101) et deux ailes (102) qui, en position dressée du dossier, sont respectivement pratiquement horizontale et pratiquement verticales.

3. Elément selon la revendication 1 ou 2, caractérisé en ce que la section droite en H évolutive (100) est pratiquement équimoment.

4. Elément selon l'une quelconque des revendications précédentes, caractérisé en ce que les moyens d'assemblage sont des prolongements (11) qui se présentent à la manière de tubes.

5. Elément selon l'une quelconque des revendications précédentes, caractérisé en ce que la cavité (12) présente un rebord d'appui (121) pour le point d'ancrage (E).

6. Elément selon l'une quelconque des revendications précédentes, caractérisé en ce que la cavité (12) est munie d'un renvoi (122) de la sangle (S) de la ceinture de sécurité (C).

7. Elément selon l'une quelconque des revendications 2 à 6, caractérisé en ce que le support (13) est relativement plat et pratiquement parallèle à l'âme (101).

8. Elément selon la revendication 7, caractérisé en ce que les support (13) et âme (101) sont situés dans des plans différents.

9. Elément selon l'une quelconque des revendications précédentes, caractérisé en ce qu'il est pourvu d'au moins une ouverture (14) apte à recevoir un repose-tête.

10. Elément selon l'une quelconque des revendications 2 à 9, caractérisé en ce que l'ouverture (14) se présente à la manière d'un fourreau orienté perpendiculairement à l'âme (101).

11. Elément selon la revendication 9 ou 10, caractérisé en ce qu'il est pourvu de deux ouvertures (14) situées entre la cavité (12) et le support (13) et de deux ouvertures (14) situées au-delà de la cavité (12) à l'opposé du support (13).

12. Elément selon l'une quelconque des revendications précédentes, caractérisée en ce qu'il est fabriqué en matériaux à base d'aluminium moulés.

## Claims

1. Upper transverse element for a frame for a seat back for a vehicle, especially a terrestrial vehicle, said seat back being formed, inter alia, by two lateral uprights (M) joined to a lower cross bar (T), in the vicinity of which an axis (Δ) for tilting the seat back between an upright position and a reclining position is situated, if necessary, characterised in that this element (10) has a beam-type configuration with an extendable cross-section (100) and has means (11) for assembly with these lateral uprights (M), an approximately central cavity (12) able to receive an anchorage point (E) of a safety belt (C) as well as an end support (13) able to receive a locking bolt (V) to retain the seat back in its upright position.

2. Element according to Claim 1, characterised in that the extendable cross-section (100) is H-shaped and has a web (101) and two flanges (102), which are respectively virtually horizontal and virtually perpendicular, when the seat back is in upright position.

3. Element according to Claim 1 or 2, characterised in that the extendable H-shaped cross-section (100) is virtually of equal moment.

4. Element according to any one of the preceding claims, characterised in that the assembly means are extensions (11) provided in the form of tubes.

5. Element according to any one of the preceding claims, characterised in that the cavity (12) has a supporting edge (121) for the anchorage point (E).

6. Element according to any one of the preceding claims, characterised in that the cavity (12) is fitted with a return means (122) for the buckle (S) of the safety belt (C).

7. Element according to any one of Claims 2 to 6, characterised in that the support (13) is relatively flat and virtually parallel to the web (101).

8. Element according to Claim 7, characterised in that the supports (13) and web (101) are located in different planes.

9. Element according to any one of the preceding claims, characterised in that at least one opening (14) is provided which is able to receive a head rest.

10. Element according to any one of Claims 2 to 9, characterised in that the opening (14) is provided in the form of a fork oriented perpendicularly to the web (101).

11. Element according to Claim 9 or 10, characterised in that two openings (14) located between the cavity (12) and the support (13) are provided as well as two openings (14) located above the cavity (12) opposite the support (13).

12. Element according to any one of the preceding claims, characterised in that it is made of aluminium-based moulded materials.

## Patentansprüche

1. Oberes Querelement für eine Rückenlehnenarmierung für Sitze von Fahrzeugen, insbesondere Landfahrzeugen, wobei die Rückenlehne unter anderem aus zwei seitlichen Streben (M) gebildet ist, die mit einer unteren Traverse (T) verbunden sind, in deren Bereich gegebenenfalls eine Achse (Δ) zum Schwenken der Rückenlehne zwischen einer aufrechten und einer heruntergeklappten Stellung angeordnet ist, dadurch gekennzeichnet, daß dieses Element (10) Trägerstruktur mit sich entwickelndem Querschnitt (100) hat und Mittel (11) zur Zusammenfügung mit diesen seitlichen Streben (M), einen ungefähr in der Mitte liegenden Hohlraum (12), der zur Aufnahme eines Verankerungspunktes (E) eines Sicherheitsgurts (C) eingerichtet ist, sowie eine Endstütze (13) zur Aufnahme eines Festlegungsriegels (V) zum Halten der Rückenlehne in ihrer aufrechten Stellung aufweist.

2. Element nach Anspruch 1, dadurch gekennzeichnet, daß der sich entwickelnde Querschnitt (100) H-förmig ist und einen Kern (101) und zwei Schenkel (102) aufweist, die in aufrechter Stellung der Rückenlehne praktisch horizontal bzw. praktisch vertikal sind.

3. Element nach Anspruch 1 oder 2, dadurch gekennzeichnet, daß der sich entwickelnde H-Querschnitt (100) praktisch gleichmomentig ist.

4. Element nach irgendeinem der vorstehenden Ansprüche, dadurch gekennzeichnet, daß die Zusammenfügungsmittel Verlängerungen (11) sind, die sich in Form von Rohren darstellen.

5. Element nach irgendeinem der vorstehenden Ansprüche, dadurch gekennzeichnet, daß der Hohlraum (12) einen Anlagerand (121) für den Verankerungspunkt (E) aufweist.

6. Element nach irgendeinem der vorstehenden Ansprüche, dadurch gekennzeichnet, daß der Hohlraum (12) mit einer Umlenkung (122) für das Gurtband (S) des Sicherheitsgurts (C) versehen ist.

7. Element nach irgendeinem der Ansprüche 2 bis 6, dadurch gekennzeichnet, daß die Stütze (13) verhältnismäßig eben und praktisch parallel zum Kern (101) ist.

8. Element nach Anspruch 7, dadurch gekennzeichnet, daß die Stütze (13) und der Kern (101) in unterschiedlichen Ebenen liegen.

9. Element nach irgendeinem der vorstehenden Ansprüche, dadurch gekennzeichnet, daß es mit wenigstens einer Öffnung (14) zur Aufnahme einer Kopfstütze versehen ist.

10. Element nach irgendeinem der Ansprüche 2 bis 9, dadurch gekennzeichnet, daß sich die Öffnung (14) in Form einer senkrecht zum Kern (101) orientierten Hülse darstellt.

11. Element nach Anspruch 9 oder 10, dadurch gekennzeichnet, daß es mit zwei Öffnungen (14), die zwischen dem Hohlraum (12) und der Stütze (13) liegen, und zwei Öffnungen (14), die jenseits des Hohlraums (12) entgegengesetzt zur Stütze (13) liegen, versehen ist.

12. Element nach irgendeinem der vorstehenden Ansprüche, dadurch gekennzeichnet, daß es aus Gußmaterialien auf Aluminiumbasis hergestellt ist.
